# EUROPEAN PATENT APPLICATION

(11) **EP 4 180 656 A1**
(43) Date of publication of application: **17.05.2023**
(21) Application number: 21208404.0
(22) Date of filing: 16.11.2021
(51) Int. Cl.: F03D 17/00, F03D 80/30

(54) **WIND TURBINE WITH A FIRE EXTINGUISHING SYSTEM**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

A wind turbine (1) comprising a generator (2), a base (5), a nacelle (6), a tower (4) having a first end mounted to the base (5) and a second end supporting the nacelle (6), an electrolytic unit (3) electrically powered by the generator (2) to produce hydrogen (6) from an input fluid (9), in particular water, and a fluid supply assembly (21) for supplying the input fluid (9) from a fluid inlet (23) arranged below a water level (31) to the electrolytic unit (3) arranged above the water level (31),wherein the hydrogen (6) produced can be taken out of the wind turbine (1) by the hydrogen output (15) .

## Description

The present invention relates to a wind turbine comprising a fire extinguishing system. The present invention further relates to a method of operating said wind turbine.

Wind turbines are increasingly used for the generation of electrical energy. A wind turbine typically comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor, thereby driving the generator. Hence, the rotational energy of the blades is transferred to the generator, which then converts the mechanical energy into electricity and transfers the electricity to the electrical grid.

Wind turbines are placed at locations providing high wind amounts. These locations can be remote onshore locations or offshore locations on the sea. For the transportation of the electrical energy, the power generated by the generator of the wind turbine travels to a transmission substation of the wind farm, where it is converted to high voltage, usually between 130-765kV, for long distance transmission on the transmission grid over power lines. The transmission grid connects the remote location of the wind farm to a transformer station of the electrical grid, which transforms the electricity to a voltage compatible with the electrical grid.

A problem of remote wind farms is that the distance between the wind farm and the transformer station of the electrical grid needs to be bridged. Long power lines with very high installation costs are required.

The current development of the technology of wind turbines tends to an increased size of wind turbines for harvesting more wind energy, with longer blades and higher towers. Due to the increasing size of wind turbines, more power is supplied to the grid which is to be transported from the wind farm to the nearest input point of the grid. Increasing the power transferred over the long-distance power lines results in higher requirements for the cables and higher costs.

To reduce the amount of energy transferred by the power lines of the transmission grid or to avoid the use of long-distance power lines completely, an electrolytic unit can be installed in the vicinity of the wind turbine. A wind turbine comprising an electrolytic unit generates electrical power by means of the generator and hydrogen by means of the electrolytic unit driven by at least a part of the power of the wind turbine.

Electrolytic units are power-to-gas units configured to produce hydrogen. Hence, the energy produced by the wind turbine may be used in an electrolysis process to generate hydrogen and oxygen. These gases can be used afterwards for the generation of electrical energy in fuel cells or to produce chemicals, such as ammonia or methane. The produced gases from the electrolytic unit can be transported by using a pipeline or by pressurizing the gas into a container, which is less expensive than transporting electricity directly over long-distance power lines.

The use of electrolytic units in combination with wind turbines is known from the prior art, for example in the document US 5,592,028 A, where a plurality of electrolysis cells are connected to a wind farm and produce hydrogen by means of the electricity produced by the generators of the wind turbines. Similarly, the document WO 2020/095012 A1 describes an offshore wind turbine system for the large-scale production of hydrogen, which includes a floating tower structure with a desalination unit and an electrolysis unit.

In a wind farm with an electrolytic unit, a fire might start due to the electrical equipment used in the wind turbine and in the electrolytic unit, as well as due to any other reasons. Due to the presence of hydrogen generated by the electrolytic unit, a fire at the wind turbine is very dangerous and might result in heavy material and personal damages. The flammability of gaseous hydrogen leads to a risk of a hydrogen-related explosion when the wind turbine is used for the production of hydrogen. This is both a commercial and safety risk, as hydrogen may not only damage the wind turbine itself but is also odorless and generally undetectable by personnel who might unknowingly be working in an explosive environment. Hence, a fire originated at the wind turbine should be extinguished as fast as possible to reduce this risk.

Common fire extinguishing systems, such as the ones used in buildings as disclosed in WO 2004 098 718 A1, use fire extinguishing agents, usually mixed with water, to neutralize the fire. However, due to the limited space available at wind turbines and the periodical checks needed for these fire extinguishing agents, as they have an expiration date, this solution is not feasible for offshore wind turbines.

It is an object of the invention to provide wind turbine with a fire extinguishing system which mitigates the risks associated with a fire starting at a hydrogen-producing wind turbine.

This is achieved by a wind turbine according to claim 1 and a method of operating the wind turbine according to claim 15.

According to the invention, a wind turbine erected in a body of water comprises a generator, a base, a nacelle, a tower having a first end mounted to the base and a second end supporting the nacelle, an electrolytic unit electrically powered by the generator to produce hydrogen from an input fluid, in particular water, and a fluid supply assembly for supplying the input fluid from a fluid inlet arranged below a water level to the electrolytic unit arranged above the water level. The hydrogen produced can be taken out of the wind turbine by the hydrogen output.

Hence, the generator generates electric power and supplies the electrolytic unit with at least a part of the power generated, as both components are electrically coupled.

Due to the fluctuation of the power generation, depending for example on weather conditions and wind levels, it is difficult to foresee the power output of a wind turbine to the electricity grid or to an energy storage device. By using a part of the energy produced by the generator to produce hydrogen, the fluctuations can be mitigated. The hydrogen can be taken out of the wind turbine by a system outlet coupled to the output of the electrolytic unit.

Hence, at least a part of the energy produced by the generator can be used to power an electrolytic unit, so that the electricity grid is not overloaded by peaks of power generation of the fluctuating power generation facility. Additionally, if a problem in the output to the electricity grid occurs, the power can be redirected completely to the electrolytic unit so that only hydrogen, is produced. The hydrogen produced is usually in a gaseous state, which can be compressed and/or mixed with other components to a liquid state which is easier to store and/or transport.

The electrolytic unit can also be a mixed gas generator which performs electrolysis and generates other gases. For example, the electrolytic unit can perform electrolysis on water and carbon dioxide to generate a mixed gas made of hydrogen and carbon monoxide. Alternatively, hydrogen can be mixed with natural gas, which increases the hydrogen/carbon ratio of the hydrogen and gives it a flame speed up to eight times higher than compressed natural gas.

According to the invention, the wind turbine further comprises a fire extinguishing system connected to the fluid supply assembly by a fluid connection for supplying input fluid to said fire extinguishing system.

Hence, the fluid supply assembly is both used to supply input fluid to the electrolytic device as well as to supply input fluid to the fire extinguishing system.

The fluid supply assembly can use the same fluid connection to supply both the electrolytic device and the fire extinguishing system with input fluid or it can use two separate fluid connections. By having the same fluid connection, costs can be saved. However, by having two separate fluid connections, the reliability of the system increases.

The advantage of having the fire extinguishing system connected to the fluid supply assembly is that it is a cost-efficient solution which does not require any complex structural changes if the fluid supply assembly is already in place for supplying input fluid to the electrolytic device. It can also be used as an "add-on" solution to existing wind turbines comprising a fluid supply assembly.

The fire extinguishing system can be combined with other security systems to minimize the risk of explosion, such as hydrogen gas purging systems. The fire extinguishing system protects the components of the wind turbine from fire and from the heat originating from the fire by cooling the components with the input fluid. The fire extinguishing system can also be used as a precaution measure to prevent other components to catch fire and be damaged.

According to a preferred embodiment of the invention, the fire extinguishing system comprises a backup power unit for supplying the components of the fluid supply assembly and/or the fire extinguishing system with power in case of fire and/or in case of a shortcut from the power from the generator. This is an additional safety measure to ensure that the fire extinguishing system will work in case of a fire. The backup power unit can be arranged in a module with increased fire protection measures.

For example, the backup power unit supplies the pumps and valves or nozzles of the fire extinguishing system and of the fluid input assembly in case of failure of the main power system. Thus, in any given situation the fire extinguishing system would continue to operate. The backup energy source may be a battery or fuel cells which energize the pump and the fire extinguishing system. This backup energy supply can be sheltered from fire and can be placed separately from any other equipment e.g. as far away as possible from any equipment that may be the source of generating a fire e.g. an electrolyzer, transformer and other electrical equipment. The backup system many also be placed within the tower or nacelle.

According to another preferred embodiment of the invention, the fire extinguishing system is a deluge fire extinguishing system.

According to a preferred embodiment of the invention, the deluge fire extinguishing system comprises a horizontal spray nozzle arrangement having a plurality of nozzles.

The horizontal spray nozzle arrangement can be a system piping and the nozzles can be sprinklers mounted to said system piping. Each sprinkler can be in selective fluid communication with the system piping and can have a normally closed condition whereby the system piping is normally dry.

A selective fluid communication allows to open and close specific sprinklers and/or nozzles so that the fire extinguishing system supplies input fluid only to the specific modules chosen.

According to another preferred embodiment of the invention, the nozzles are arranged at a frame for support and for guiding the input fluid to the nozzles. The frame can include a piping to provide the nozzles with fluid.

The nozzles can be integrated in the frame. The frame can comprise separately attached water pipes. Alternatively, the frame can be hollow and allow input fluid to flow through its center or through a pipe extending through the inner part of the frame.

According to another preferred embodiment of the invention, the fire extinguishing system comprises valves. The valves can open to fill the fire extinguishing system with input fluid before the nozzles open to let the input fluid out of the fire extinguishing system.

According to another preferred embodiment of the invention, the fluid inlet comprises an opening in the base or in the tower below the water level through which the input fluid is transported to the electrolytic unit.

Hence, the base has an opening or a hole to collect the water. The location of the opening at the base should be chosen in such a way that the opening is always submerged below the water level, considering the tidal movements of the water.

According to another preferred embodiment of the invention, said wind turbine is an offshore wind turbine erected in a body of water.

The electrolytic unit is used to produce hydrogen from water. Hence, the wind turbine can be installed in the vicinity of water and the water is extracted by means of the fluid supply assembly. By erecting the turbine on a body of water directly, the input fluid does not have to be transported to the wind turbine location, as it is available on-site. Proper filtering and cleaning of the water might be needed prior of using the water for the electrolysis.

According to a preferred embodiment of the invention, the base is a foundation mounted to the floor of the body of water.

The base is a foundation which may be suitable for shallow and/or intermediate deep waters, such as in coastal waters. The type of foundation can be selected from the group consisting of a monopile foundation, a jacket frame foundation, a tripod foundation, a gravity base foundation, a suction bucket formation, a tubular truss foundation or a tripile foundation.

Hence, the wind turbine is connected to the seabed or to the bed of the body of water by means of the foundation.

According to another preferred embodiment of the invention, the wind turbine is a floating wind turbine, wherein the base is a floating, a semi-submerged or a submerged base platform.

The base is a floating, a semi-submerged or a submerged base platform which may be suitable for deep waters. The type of base platform can be selected from the group consisting of a floater, a tensioned-leg platform TLP or a semi-submersible platform.

The base platform can be anchored to an underwater ground to limit the freedom of movement of the floating wind turbine in horizontal directions, i.e. in directions which are substantially parallel to the surface of the water. Floating offshore bases have typically no fixed vertical positions to be able to compensate sea level variations. For the anchoring, it is possible to use at least one cable or chain, typically a plurality of chains, cables or lines, the latter also called moorings in the nautical context.

According to another preferred embodiment of the invention, the wind turbine further comprises an electrolytic unit platform supporting at least a part of the electrolytic unit above the water level.

With the dedicated electrolytic unit platform, the electrolytic unit can be more easily mounted than for example by installing the electrolytic unit on the nacelle and at least a part of the electrolytic unit can be kept above the water level.

According to another preferred embodiment of the invention, the electrolytic unit platform supports a plurality of containers for storing equipment, such as the electrolytic unit. Due to the harsh environmental conditions of wind turbine locations, the components of the electrolytic unit are exposed to rain and dirt, as well as to salt for offshore wind turbines installed at the sea. This results in a fast corrosion of the metals of the components. In order to prevent corrosion, components of the wind turbine installed comprising metallic parts exposed to the atmosphere, such as an electrolytic unit installed on an electrolytic unit platform of the wind turbine, are usually housed in containers.

According to another preferred embodiment of the invention, the fire extinguishing system is arranged at or close to the electrolytic unit platform, in particular close to the containers. Due to the electrical equipment housed in the containers, the probability of a fire originating there is increased compared to other parts of the wind turbine, such as a hollow tower section. Hence, it is advantageous to arrange the fire extinguishing system in the vicinity of the containers.

According to another preferred embodiment of the invention, the fire extinguishing system is arranged at or close to the nacelle. The nacelle contains electrical equipment, such as the generator or the transformer and electrical cables, so it is advantageous to arrange the fire extinguishing system at the nacelle.

According to another preferred embodiment of the invention, the fire extinguishing system is arranged at or close to the tower. A fire originating in any part of the wind turbine may extend to the tower, causing several damages from the fire and the heat. To prevent this, the fire extinguishing system can be arranged at the tower. Additionally, the advantage of having the fire extinguishing system is arranged at or close to the tower is that the system is able to cool the tower, thereby preventing a damage to the tower in case a fire starts close to the tower. This maintains the main structure of the wind turbine safe in case of fire, preventing critical damages to the wind turbine.

Hence, the fire extinguishing system can be arranged at multiple parts of the wind turbine. It can also be arranged at both the nacelle and the electrolytic unit platform or at both the tower and the electrolytic unit platform. It can also be additionally arranged at the tower, thereby having components of the fire extinguishing system arranged at the tower, other components at the nacelle and other components at the electrolytic unit platform. Hence, in case of fire in a specific location, this fire can be extinguished with the components of the fire extinguishing system arranged at that specific location.

According to another preferred embodiment of the invention, the fire extinguishing system comprises a gas extinguisher, such as a CO2 extinguisher, which can be installed in modules which are sensitive to the input fluid, such as the inner components of the nacelle. This avoids that water damages this components.

According to another preferred embodiment of the invention, the electrolytic unit comprises a desalination unit, wherein the input fluid supplied to the fire extinguishing system is conducted through the desalination unit prior to reaching the fire extinguishing system for avoiding salt and other impurities to block the fire extinguishing system. This measure reduces the corrosion originated from saltwater compared to desalinated water.

According to another preferred embodiment of the invention, the fluid supply assembly comprises a filter for filtering the input fluid. Hence, particles and other substances in the water are filtered prior to entering the electrolytic unit. The cleaning unit can also have nozzles directed to the filter to clean the filter.

According to another preferred embodiment of the invention, the fluid supply assembly comprises a pump for conducting pressurized input fluid to the fire extinguishing system. The pump is configured to pump the input fluid from the body of water and through the fluid connection between the fluid inlet and the fire extinguishing system.

According to another preferred embodiment of the invention, the fire extinguishing system comprises fire detector arranged to detect the characteristics of a fire and to generate an output signal indicating a fire detected by the sensor.

The fire detector can be adapted to detect temperatures associated with a fire, or exhaust gases emanating from the fire. If a fire is detected, the fire detector generates an output signal indicating a fire to warn workers from the presence of a fire and to activate the fire extinguishing system.

The fire detector can also be used to stop the production of hydrogen and/or purge the electrolytic unit from hydrogen in case of fire to minimize the risk of an explosion.

The sensor can also be configured to detect overheating of the modules of the wind turbine, which can automatically set off the fire extinguishing system to cool down the modules and prevent the building of a fire.

The fire extinguishing system can spread input fluid on top of the containers to prevent water coming inside the containers and damaging the equipment, but at the same time cooling down the containers.

According to another preferred embodiment of the invention, the fire extinguishing system is controlled by a control unit, wherein the control unit activates the fire extinguishing system when the fire detector detects the presence of fire.

A control unit is provided that monitors if a fire has been detected by the fire detector. Hence, it is in communication with the fire detector and additionally with the valves or nozzles of the fire extinguishing system and with the input fluid assembly to activate the fire extinguishing system in response to an output signal indicating fire.

According to another preferred embodiment of the invention, the fire extinguishing system can be manually activated by an operator. Hence, by triggering a signal, for example by pressing a button, the fire extinguishing system is manually activated.

According to another preferred embodiment of the invention, the fluid supply assembly comprises a flexible hose and a hose reel configured to be rotated for winding the hose thereon, wherein the fluid inlet is arranged at an end of the flexible hose.

The hose of the fluid supply assembly is flexible to be able to wind the hose on the hose reel. Hence, by rotating the hose reel, the flexible hose can be lowered from a raised position to a lowered position or vice versa. The fluid supply assembly can comprise means to rotate the hose reel for winding the hose thereon and thereby changing from a lowered position of the hose to a raised position of the hose.

The raised position can be a position in which the hose is completely rolled over the water level and the lowered position is a position in which the fluid inlet of the hose is submerged under the water level.

In the lowered position, the hose can be hanging from the hose reel without any supporting or guiding means, i.e. it can be hanging free.

The hose can be for example a hollow tube which can be reinforced for a better durability.

If the wind turbine comprises an electrolytic unit platform, the platform provides for an open space where components such as the hose reel can be arranged. It is easily accessible by workers, hence simplifying maintenance works at the hose reel or the rotation of the hose reel if done manually. For example, the hose can be cleaned from marine growth much more easily if it is raised to the platform, as the hose reel is arranged at the platform.

As an alternative to the hose reel, the flexible hose can be a fixed water raiser.

According to another preferred embodiment of the invention, the length of the hose is adjusted according to the water level. For example, the hose can be lowered below the low tide level to be all the time under the water level when the input fluid is needed. Alternatively, the hose can adjust according to the tidal range and the waves to be below the water level when the input fluid is needed and thereby having a minimal hose length, which is advantageous to prevent that the hose hits the foundation or the tower wall. Here, if a fire is detected, the fluid inlet of the hose is automatically deployed below the water level.

According to another preferred embodiment of the invention, the fluid supply assembly further comprises a submergible pump at or close to the fluid inlet.

Hence, within the hose or at the end of the hose, a submergible pump is installed to pump the fluid to the electrolytic unit.

According to another preferred embodiment of the invention, the pump is installed inside the hose, wherein the pump can be lifted through the hose for inspection and maintenance works. The pump can also be lowered through the hose. Additionally, the pump can also be raised to be above the water level to protect the pump against corrosion and the marine environment when it is not being used. This also limits the marine growth on the pump and on the hose.

The pump can be raised also due to harsh weather conditions, i.e. due to a storm or the like to protect the pump.

A crane can be installed to move the pump to a location where it can be serviced more easily.

According to another preferred embodiment of the invention, the fluid supply assembly further comprises a weight attached at or close to the fluid inlet. The weight stiffens the hose so as to have a straight hose and avoid that the hose impacts the tower wall, the foundation wall or other components. The weight also stabilizes the hose against waves, current or wind. The weight added depends on the site conditions.

According to another preferred embodiment of the invention, the fluid supply assembly further comprises a guiding means for guiding and supporting the hose. The guiding means are advantageous to keep the hose in position and avoid oscillations of the hose, which can result in impacts to the tower wall, the foundation wall or other components and in damage. According to another preferred embodiment of the invention, the guiding means comprises a bell supported by a beam through which the hose is guided. The bell works as a funnel to easily catch the hanging hose when being lowered from the raised position to the lowered position below the water level. The beam can be attached to the foundation, to the tower or to any other component for providing stability and support to the guiding means.

According to another preferred embodiment of the invention, the guiding means comprises a hollow casing through which the hose is guided. Hence, the hose is contained in a hollow casing, for example a caisson, i.e. a watertight retaining structure.

The hollow casing can be dimensioned in such a way as to allow the hose to be raised and lowered within the hollow casing. Hence, the hollow casing is like a guiding tunnel guiding the hose from a raised position to a lowered position and vice versa.

According to another preferred embodiment of the invention, the hose is raised and lowered after a specific time or periodically for keeping the hollow casing clean. For example, the hose is moved up and down once a day to keep the hollow casing clean. The hose may also comprise a scraper to clear off any marine growth when lowered or raised in the hollow casing.

According to another preferred embodiment of the invention, the fluid supply assembly comprises a filter for filtering the input fluid. Hence, particles and other substances in the water are filtered prior to entering the electrolytic unit.

According to another preferred embodiment of the invention, the filter is installed inside the hose, wherein the filter can be lifted through the hose for cleaning, inspection and maintenance works.

According to another preferred embodiment of the invention, the fluid inlet is arranged in the lowered position of the hose at a distance sufficiently removed from the ground level for avoiding the introduction of sand or other substances from the ground level into the fluid inlet. The ground level is the level below the body of water, for example the seabed level. This method reduces the costs of filtering, as less energy and maintenance of the filters is needed.

According to another preferred embodiment of the invention, the fluid inlet is made from an antifouling material, such as copper, to avoid plant growth, in particular marine growth, on the fluid inlet. In particular, any inert material can be used as antifouling material to prevent the formation of plants on the fluid inlet, which obstructs the water flow.

Using the same fluid connections of the fluid supply assembly to supply input fluid to both the electrolytic unit and the fire extinguishing system eases the process of cleaning the hose, as only one fluid connection has to be cleaned from marine growth.

Yet another aspect of the invention relates to a method of supplying input fluid to the fire extinguishing system of a wind turbine comprising the steps of suctioning input fluid by means of the fluid supply assembly and conducting the input fluid from the fluid supply assembly to the fire extinguishing system by means of the fluid connection.

In order to facilitate the understanding of the characteristics of the invention and being an integral part of this specification, some drawing sheets are attached on which figures, with an illustrative but not limiting character, the following is represented:
Figure 1 shows a schematic view of an offshore wind turbine comprising a hose hanging from the electrolytic unit for the fluid supply.
Figure 2 shows a schematic view of an offshore wind turbine comprising a fluid connection expanding through the inner part of the base.
Figure 3 shows an offshore wind turbine configured as a floating wind turbine with a submerged base platform.
Figure 4 shows an offshore wind turbine comprising a flexible hose hanging from a hose reel.
Figure 5 shows a wind turbine with a fire extinguishing system and a fluid supply assembly comprising a hose reel mounted on an electrolytic unit platform of an offshore wind turbine.
Figure 6 shows a wind turbine with a fire extinguishing system and a fluid supply assembly comprising a hose with a submergible pump at the fluid inlet located at an end of the hose.
Figure 7 shows a wind turbine with a fire extinguishing system and a fluid supply assembly comprising a hose with a submergible pump and a weight attached at the fluid inlet.
Figure 8 shows a wind turbine with a fire extinguishing system and a fluid supply assembly comprising guiding means for guiding and supporting the hose, wherein the guiding means comprises two bells supported by beams.
Figure 9 shows a fire extinguishing system arranged on top of two containers.
Figure 10 shows a fire extinguishing system comprising a horizontal spray nozzle arrangement and a plurality of nozzles arranged at a frame.
Figures 11 to 13 show a fire extinguishing system arranged on containers at the electrolytic unit platform.

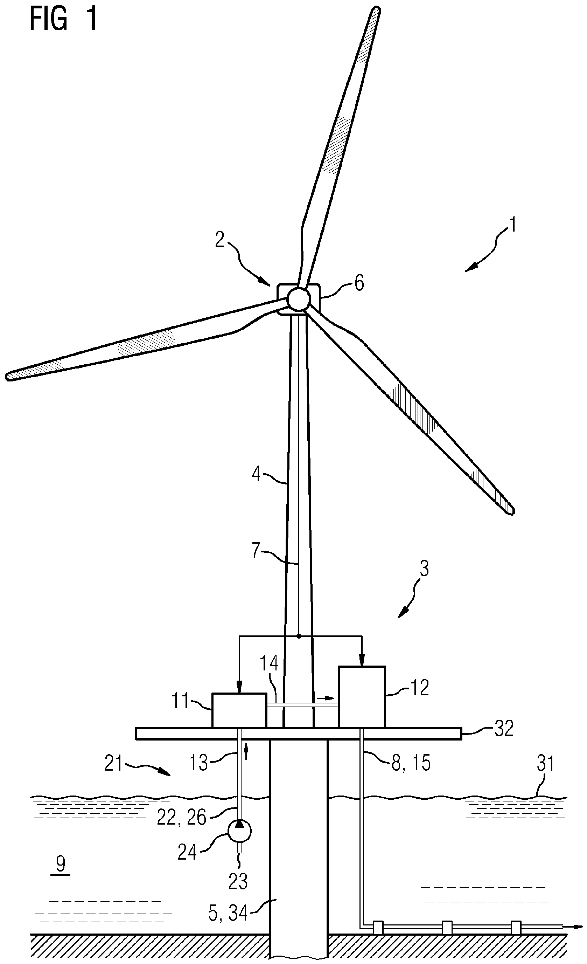

Figure 1 shows a schematic view of an offshore wind turbine 1 comprising a hose hanging from the electrolytic unit 3 for the fluid supply.

The offshore wind turbine 1 comprises a tower 4 on top of which a nacelle 6 is rotatably mounted. The offshore wind turbine 1 further comprises a hub which is connected to the nacelle 6. A plurality of blades is mounted on the hub. The hub is connected to a generator 2 and is rotatably mounted about a rotor axis by means of a main bearing. The offshore wind turbine 1 further comprises an electrolytic unit platform 32 on which the electrolytic unit 3 is arranged above the water level 31. The offshore wind turbine 1 further comprises a base 5 on which the tower 4 is mounted. The base 5 is a foundation 34 such as a monopile mounted to the floor of the body of water.

The power produced by the generator 2 is completely transferred to the electrolytic unit 3, but it would be also possible to connect the offshore wind turbine 1 to an electricity grid and transfer a part of the power produced by the generator 2 to the electricity grid. The electrolytic unit 3 comprises a desalination unit 11 and an electrolytic device 12, as well as a fluid connection between the desalination unit 11 and the electrolytic device 12 through which desalinated water 14 is transported. The electrolytic device 12 and the desalination unit 11 are both powered by the generator 2, which is connected to both devices by means of an electric connection 7.

The input fluid 9 for the electrolytic unit 3 is saltwater 13 taken of the sea of the offshore wind turbine 1 by means of a pump 24. Hence, the fluid supply assembly 21 supplies saltwater 13 to the electrolytic unit 3 by means of a hanging hose 26. The hose 26 hangs from the desalination unit 11 to the water body at the outer part of the fundament 5. The saltwater 13 enters the fluid supply assembly 21 through a fluid inlet 23 and is transported through the hose 26, which creates a fluid connection 22 between the fluid inlet 23 and the desalination unit 11 forming part of the electrolytic unit 3. The fluid inlet 23 and the pump 24 are submerged below the water level 31 to suction the saltwater 13.

The desalinated water 14 is the input fluid 9 of the electrolytic device 12. The electrolytic device has a hydrogen output 15 through which the hydrogen 8 generated is extracted. This hydrogen output 15 is connected to a hydrogen pipeline to transport the hydrogen 8 onshore. Alternatively, the hydrogen 8 could be filled in containers and transported onshore.

The fluid supply assembly 21 is connected to a fire extinguishing system 50, not shown in the figure, by means of a fluid connection 22. This fire extinguishing system 50 can be arranged at the nacelle 6 and/or at the tower 4 and/or at the electrolytic unit platform 32.

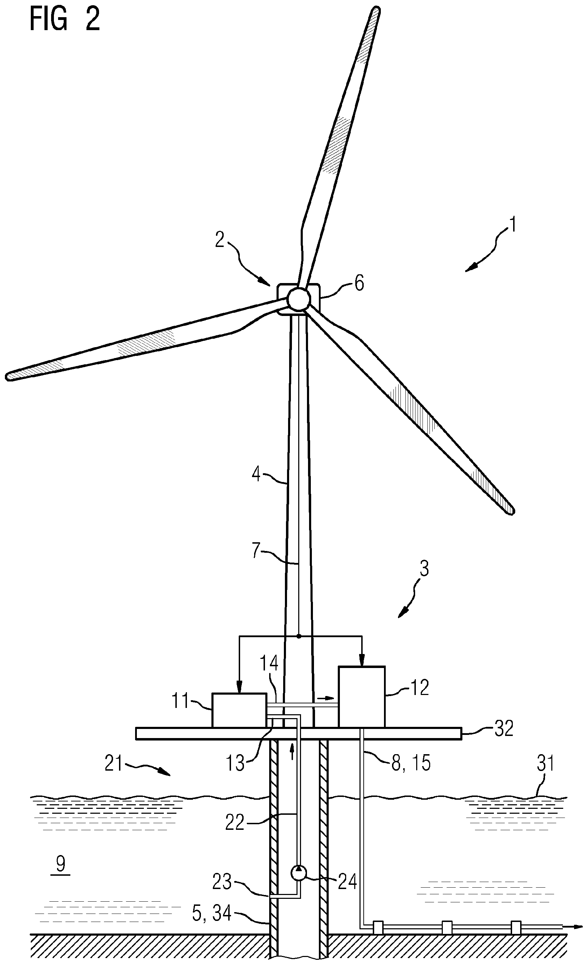

Figure 2 shows a schematic view of an offshore wind turbine 1 according to an embodiment of the invention comprising a fluid connection 22 expanding through the inner part of the base 5.

In this embodiment, the offshore wind turbine 1 comprises a base 5 on which the tower 4 is mounted. The base 5 is a foundation 34, such as a monopile, mounted to the floor of the body of water.

An opening at the base 5 allows for the suctioning of the saltwater 13 by means of the pump 24 of the fluid supply assembly 21 and a fluid inlet 23 arranged below the water level 31. The fluid connection 22 through the base 5 can be formed as a channel or as a pipeline. The fluid connection 22 extends in the longitudinal direction parallel to the axis of the base 5 and the axis of the tower 4 towards the electrolytic unit platform 32 of the offshore wind turbine 1. This fluid connection 22 extends through the inner part of the base 5, i.e. through the inner part of the foundation 34.

The fluid supply assembly 21 is connected to a fire extinguishing system 50, not shown in the figure, by means of a fluid connection 22. This fire extinguishing system 50 can be arranged at the nacelle 6 and/or at the tower 4 and/or at the electrolytic unit platform 32.

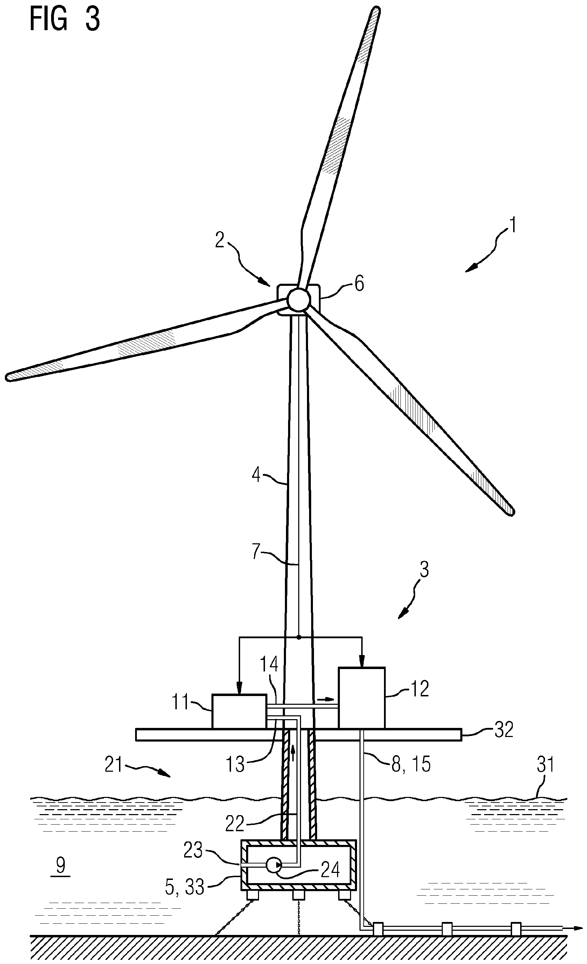

Figure 3 shows an offshore wind turbine 1 configured as a floating wind turbine according to another embodiment of the invention with a submerged base platform 33.

The submerged base platform 33 is anchored to the underwater ground by a plurality of flexible coupling members such as anchoring ropes, anchor cables and anchor chains. The base platform 33 may be a box-shaped or a disc-shaped tank with a large horizontal extension and a relatively short vertical extension.

An opening at the base platform 33 allows for the suctioning of the saltwater 13 by means of the pump 24 of the fluid supply assembly 21. The fluid connection 22 through the base platform 33 can be formed as a channel or as a pipeline. The fluid connection 22 extends in the longitudinal direction parallel to the axis of the base platform 33 and the axis of the tower 4 towards the electrolytic unit platform 32 of the offshore wind turbine 1. This fluid connection 22 extends through the inner part of the base platform 33 and, as the top of the base platform 33 ends below the electrolytic unit platform 32, the fluid connection 22 extends through the inner part of the tower 4 below the electrolytic unit platform 32 as well.

In other embodiments, the base platform 33 can be of the spar-buoy type. Spar-buoys consist of a single long cylindrical tank and achieve stability by moving the center of mass as low as possible. In still other embodiments, the base platform 33 can be a more complex structure and includes three or more buoyant columns to support the offshore wind turbine 1.

The fluid supply assembly 21 is connected to a fire extinguishing system 50, not shown in the figure, by means of a fluid connection 22. This fire extinguishing system 50 can be arranged at the nacelle 6 and/or at the tower 4 and/or at the electrolytic unit platform 32.

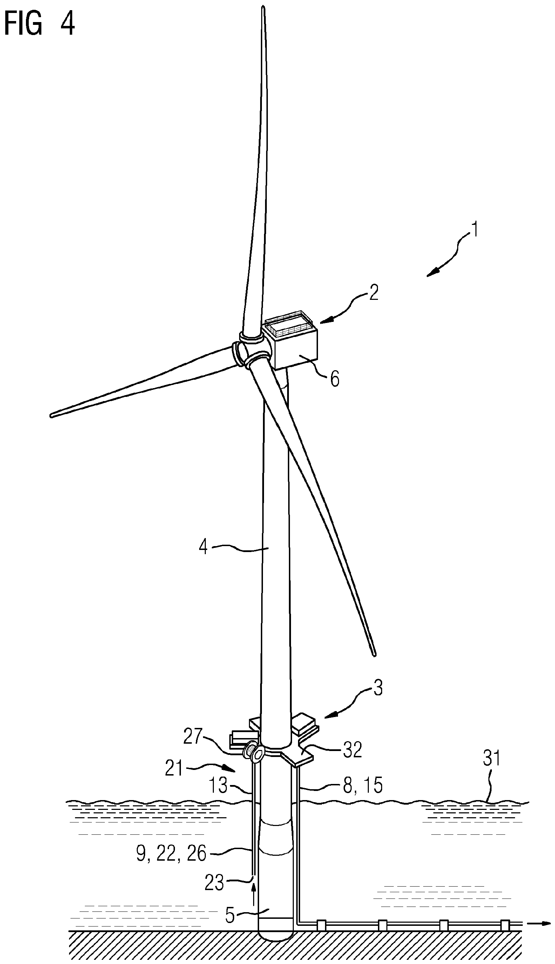

Figure 4 shows an offshore wind turbine 1 according to an embodiment of the invention comprising a flexible hose 26 hanging from a hose reel 27. By means of the hose reel 27, the hose 26 can be raised above the water level 31 and lowered below the water level 31.

The fluid supply assembly 21 shown in Figure 4 is connected to a fire extinguishing system 50, not shown in the figure, by means of a fluid connection 22. This fire extinguishing system 50 can be arranged at the nacelle 6 and/or at the tower 4 and/or at the electrolytic unit platform 32.

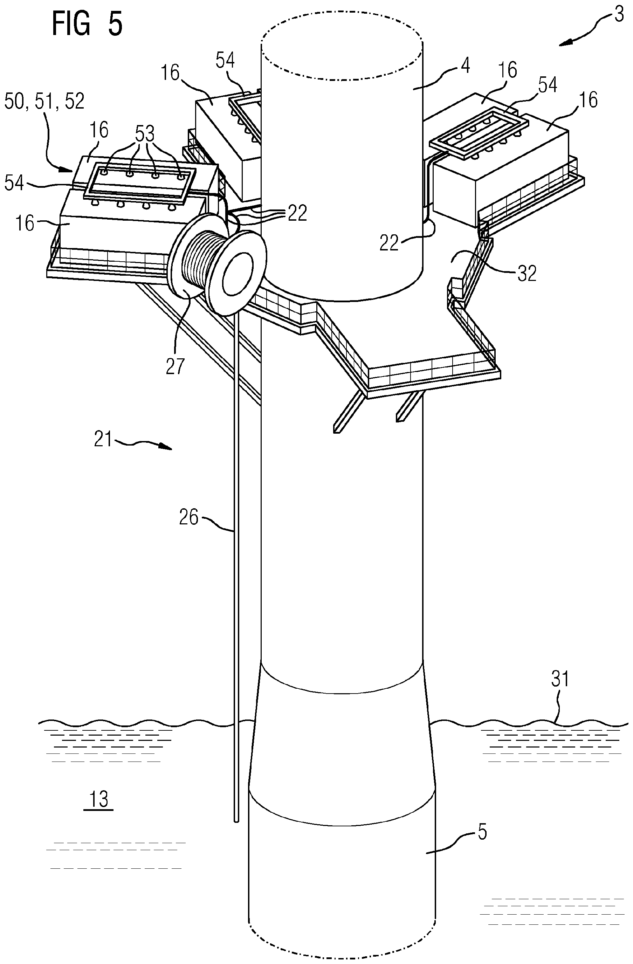

Figure 5 shows a hose reel 27 mounted on an electrolytic unit platform 32 of an offshore wind turbine 1. The hose reel 27 is attached to the electrolytic unit platform 32, which simplifies the service works on the hose 26, such as the cleaning of the hose 26 and the fluid inlet 23 from marine growth.

In this figure, a plurality of containers 16 is shown arranged on the electrolytic unit platform 32. On the containers, a fire extinguishing system 50 of the type of a deluge fire extinguishing system 51 comprising a horizontal spray nozzle arrangement 52 having a plurality of nozzles 53 is arranged. The fire extinguishing system 50 is coupled by a fluid connection 22 to the fluid supply assembly 21 in such a way that, in case of fire, input fluid 9 taken from the fluid supply assembly 21 can be delivered by means of the fluid connection 22 to the nozzles 53 of the fire extinguishing system 51 to extinguish the fire or to protect the containers 16 from the fire.

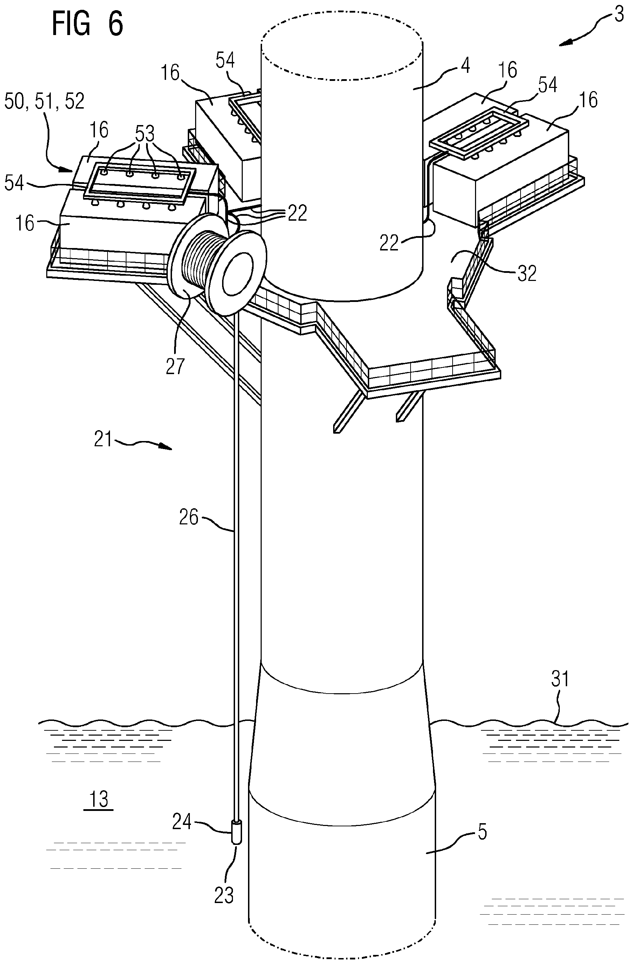

Figure 6 shows a hose 26 with a submergible pump 24 at the fluid inlet 23 located at an end of the hose 26. With the submergible pump 24, the input fluid 9 can be pumped from the water body to the electrolytic unit 3.

In a similar way as in Figure 5, in Figure 6 a fire extinguishing system 50 of the type of a deluge fire extinguishing system 51 is arranged on the containers 16 of the electrolytic unit platform 32.

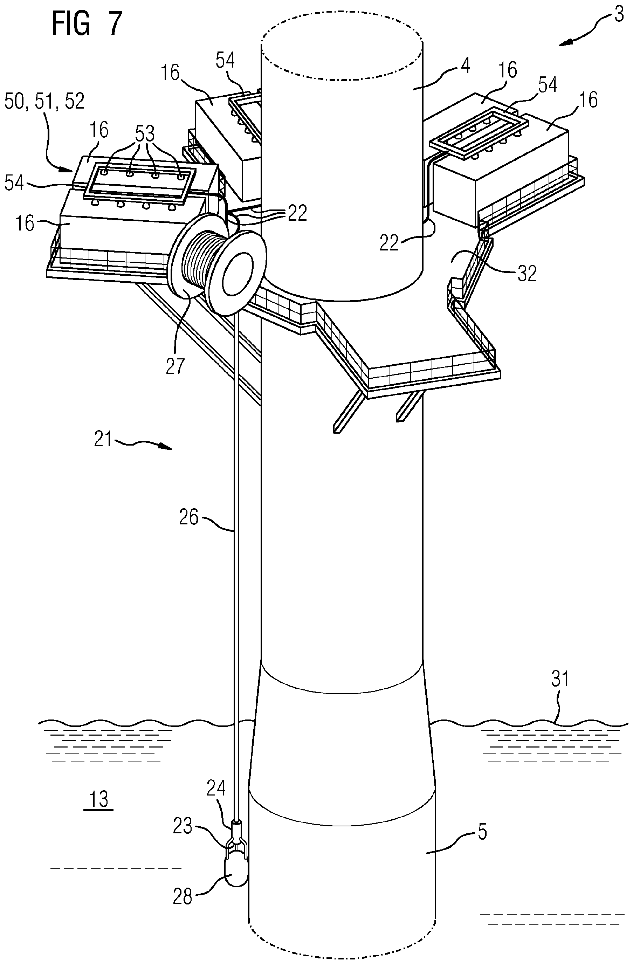

Figure 7 shows a hose 26 with a submergible pump 24 and a weight 28 attached at the fluid inlet 23. The weight 28 stiffens the hose 26 so as to have a straight hose 26 and avoid that the hose 26 impacts the tower 4, the base 5 or other components. The weight 28 also stabilizes the hose 26 against waves, current or wind.

In a similar way as in Figure 5, in Figure 7 a fire extinguishing system 50 of the type of a deluge fire extinguishing system 51 is arranged on the containers 16 of the electrolytic unit platform 32.

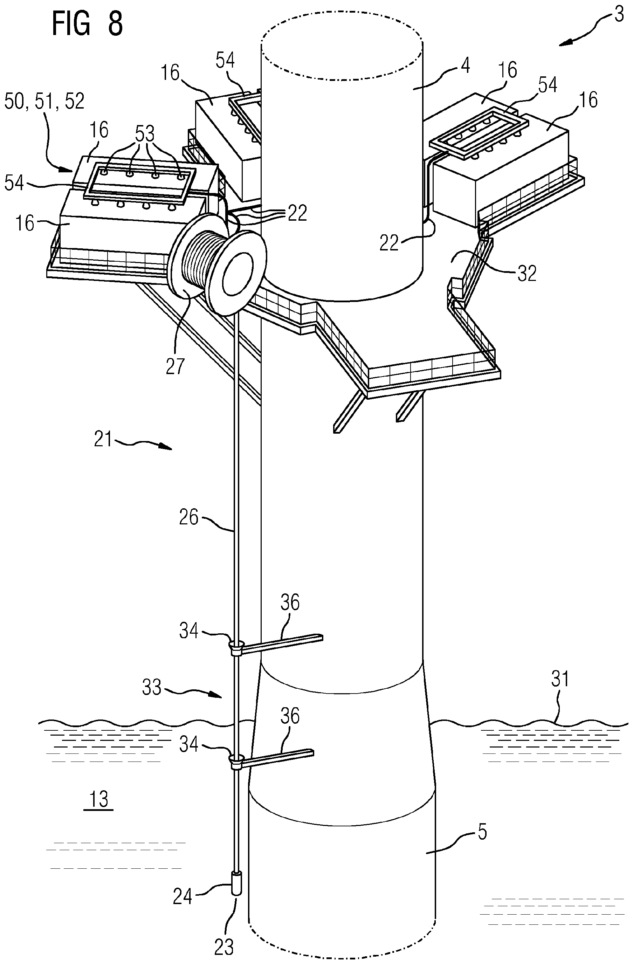

Figure 8 shows a fluid supply assembly 21 with a guiding means 30 for guiding and supporting the hose 26, wherein the guiding means 30 comprises two bells 25 supported by beams 36. The bell 25 works as a funnel to easily catch the hanging hose 26 when being lowered from the raised position to the lowered position below the water level 31. The beam 36 is attached to the base 5 for providing stability and support to the guiding means 30.

In a similar way as in Figure 5, in Figure 8 a fire extinguishing system 50 of the type of a deluge fire extinguishing system 51 is arranged on the containers 16 of the electrolytic unit platform 32.

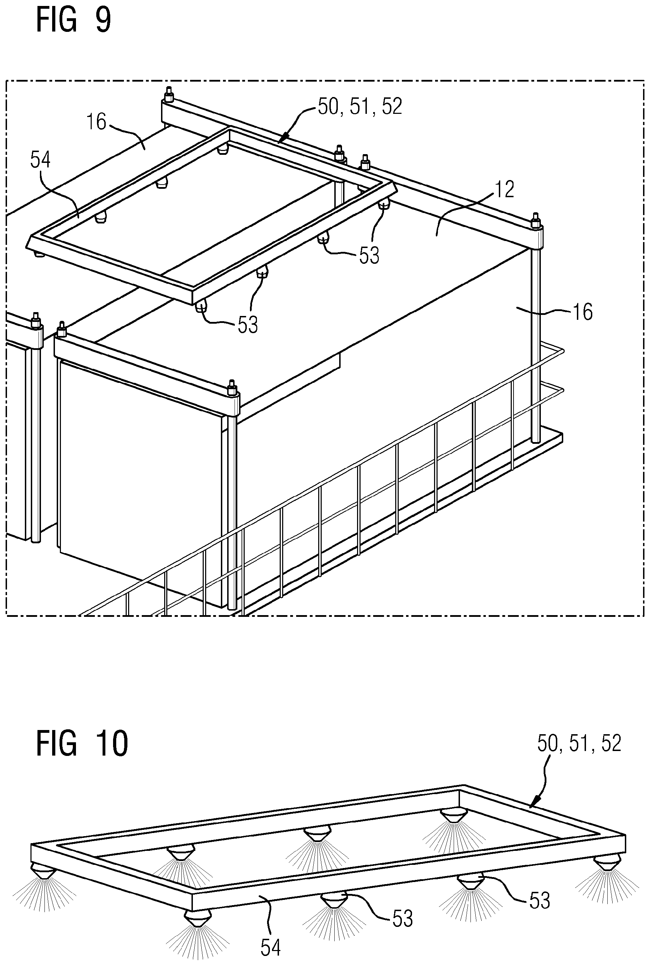

Figure 9 shows a fire extinguishing system 50 arranged on top of two containers 16. The fire extinguishing system 50 is of the type of a deluge fire extinguishing system 51 comprising a horizontal spray nozzle arrangement 52 having a plurality of nozzles 53 arranged at a frame 54. The electrolytic device 12 is arranged in one of the containers 16.

Figure 10 shows a fire extinguishing system 50 comprising a horizontal spray nozzle arrangement 52 and a plurality of nozzles 53 arranged at a frame 54.

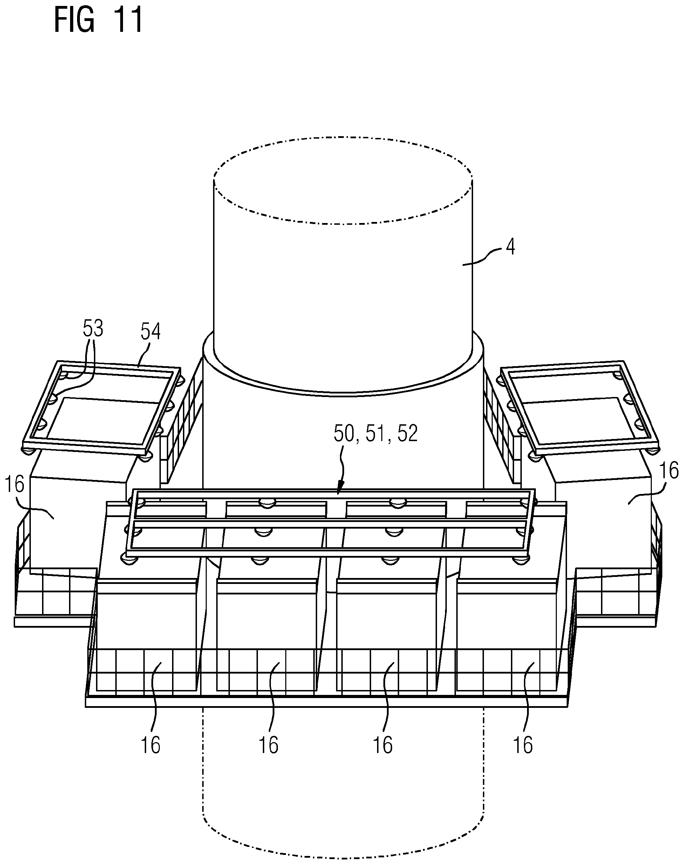

Figures 11 to 13 show a fire extinguishing system 50 arranged on containers 16 at the electrolytic unit platform 32. The fire extinguishing system 50 is of the type of a deluge fire extinguishing system 51 comprising a horizontal spray nozzle arrangement 52 having a plurality of nozzles 53 arranged at a frame 54.

In this setup, the fire extinguishing system 50 has a selective fluid communication with each nozzle 53, so that they can be opened and closed individually. A selective fluid communication allows to open and close specific sprinklers and/or nozzles 53 so that the fire extinguishing system 50 supplies input fluid 9 only to the specific modules or components chosen.

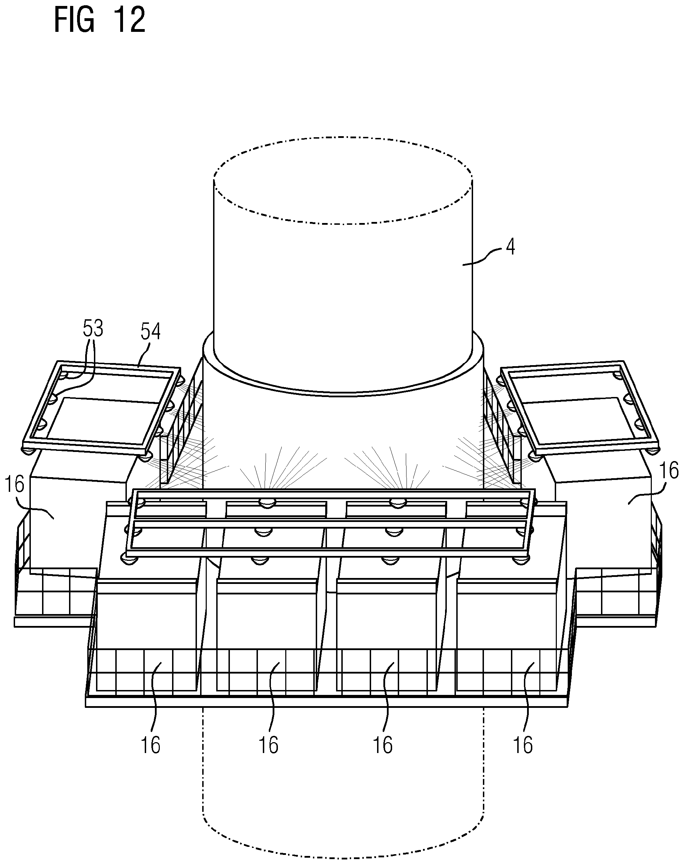

For example, in Figure 12, only the nozzles 53 close to the tower 4 are open, so that input fluid 9 only exits from the nozzles 53 close to the tower 4. The system prioritizes the main structure to prevent a catastrophic failure if the structure is overheated. This helps saving the wind turbine 1 and foundation 34 and only modules and platform infrastructure must be replaced to the extent they are damaged or destroyed under a fire.

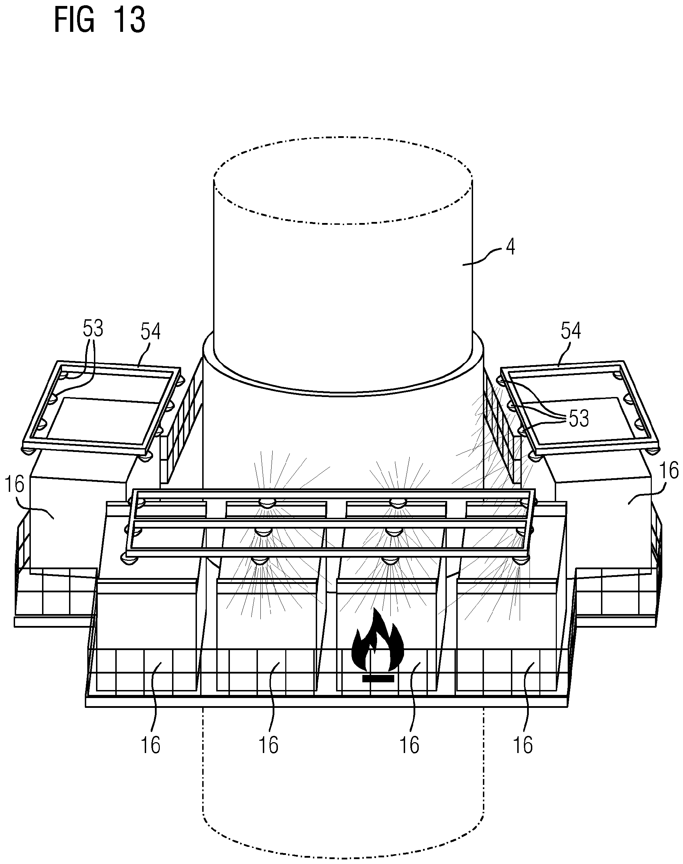

In Figure 13, a fire started in one of the containers 16. With the selective fluid communication, the nozzles 53 arranged at container 16 in which the fire started are opened to extinguish the fire. Additionally, the nozzles 53 of the neighboring containers 16 and components can be opened to cool down the other components and prevent the fire from propagating.

### Reference List

- 1: Wind turbine
- 2: Generator
- 3: Electrolytic unit
- 4: Tower
- 5: Base
- 6: Nacelle
- 7: Electrical connection
- 8: Hydrogen
- 9: Input fluid
- 11: Desalination unit
- 12: Electrolytic device
- 13: Saltwater
- 14: Desalinated water
- 15: Hydrogen output
- 16: Container
- 21: Fluid supply assembly
- 22: Fluid connection
- 23: Fluid inlet
- 24: Pump
- 25: Bell
- 26: Hose
- 27: Hose reel
- 28: Weight
- 29: Hose reel mount
- 30: Guiding means
- 31: Water level
- 32: Electrolytic unit platform
- 33: Base platform
- 34: Foundation
- 36: Beam
- 50: Fire extinguishing system
- 51: Deluge fire extinguishing system
- 52: Horizontal spray nozzle arrangement
- 53: Nozzle
- 54: Frame

## Claims

1. A wind turbine (1) comprising a generator (2),
a base (5),
a nacelle (6),
a tower (4) having a first end mounted to the base (5) and a second end supporting the nacelle (6),
an electrolytic unit (3) electrically powered by the generator (2) to produce hydrogen (6) from an input fluid (9), in particular water, and
a fluid supply assembly (21) for supplying the input fluid (9) from a fluid inlet (23) arranged below a water level (31) to the electrolytic unit (3) arranged above the water level (31),
wherein the hydrogen (6) produced can be taken out of the wind turbine (1) by the hydrogen output (15),
**characterized in that** said wind turbine (1) further comprises a fire extinguishing system (50) connected to the fluid supply assembly (21) by a fluid connection (22) for supplying input fluid (9) to said fire extinguishing system (50).

2. The wind turbine (1) according to claim 1, **characterized in that** the fire extinguishing system (50) is a deluge fire extinguishing system (51) comprising a horizontal spray nozzle arrangement (52) having a plurality of nozzles (53).

3. The wind turbine (1) according to claim 2, **characterized in that** the nozzles (53) are arranged at a frame (54) for support and for guiding the input fluid (9) to the nozzles (53) .

4. The wind turbine (1) according to any of the preceding claims, **characterized in that** said wind turbine (1) further comprises an electrolytic unit platform (32) supporting at least a part of the electrolytic unit (3) above the water level (31).

5. The wind turbine (1) according to claim 4, **characterized in that** the electrolytic unit platform (32) supports a plurality of containers (16) for storing equipment, such as the electrolytic unit (3).

6. The wind turbine (1) according to claim 5, **characterized in that** the fire extinguishing system (50) is arranged at or close to the electrolytic unit platform (32), in particular close to the containers (16).

7. The wind turbine (1) according to any of the preceding claims, **characterized in that** the fire extinguishing system (50) is arranged at or close to the nacelle (6).

8. The wind turbine (1) according to any of the preceding claims, **characterized in that** the electrolytic unit (3) comprises a desalination unit (11), wherein the input fluid (9) supplied to the fire extinguishing system (50) is conducted through the desalination unit (11) prior to reaching the fire extinguishing system (50) for avoiding salt and other impurities to block the fire extinguishing system (50).

9. The wind turbine (1) according to any of the preceding claims, **characterized in that** the fluid supply assembly (21) comprises a filter for filtering the input fluid (9).

10. The wind turbine (1) according to any of the preceding claims, **characterized in that** the fluid supply assembly (21) comprises a pump (24) for conducting pressurized input fluid (9) to the fire extinguishing system (50).

11. The wind turbine (1) according to any of the preceding claims, **characterized in that** the fire extinguishing system (50) comprises fire detector arranged to detect the characteristics of a fire and to generate an output signal indicating a fire detected by the sensor.

12. The wind turbine (1) according to claim 11, **characterized in that** the fire extinguishing system (50) is controlled by a control unit, wherein the control unit activates the fire extinguishing system (50) when the fire detector detects the presence of fire.

13. The wind turbine (1) according to any of the preceding claims, **characterized in that** the fluid supply assembly (21) comprises a flexible hose (26) and a hose reel (26) configured to be rotated for winding the hose (26) thereon, wherein the fluid inlet (23) is arranged at an end of the flexible hose (26).

14. The wind turbine (1) according to claim 13, **characterized in that** the fluid supply assembly (21) further comprises a guiding means (30) for guiding and supporting the hose (26).

15. Method of supplying input fluid (9) to the fire extinguishing system (50) of a wind turbine (1) according to any of the preceding claims, the method comprising the steps of:
- suctioning input fluid (9) by means of the fluid supply assembly (21), and
- conducting the input fluid (9) from the fluid supply assembly (21) to the fire extinguishing system (50) by means of the fluid connection (22).
